# EUROPÄISCHE PATENTSCHRIFT

(11) **EP 2 190 709 B1**
(45) Veröffentlichungstag und Bekanntmachung des Hinweises auf die Patenterteilung: **08.06.2011**
(21) Anmeldenummer: 08804231.2
(22) Anmeldetag: 16.09.2008
(51) Int. Cl.: B60W 10/06, B60W 10/08, B60W 20/00, B60W 10/10, B60W 10/02, B60K 6/48

(54) **VERFAHREN ZUM BETREIBEN EINES ANTRIEBSSTRANGS**
METHOD FOR OPERATING A DRIVE TRAIN
PROCÉDÉ PERMETTANT DE FAIRE FONCTIONNER UNE CHAÎNE CINÉMATIQUE

(30) Priorität: 22.09.2007 DE 102007045366
(43) Veröffentlichungstag der Anmeldung: 02.06.2010
(73) Patentinhaber: ZF Friedrichshafen AG, 88038 Friedrichshafen (DE)
(72) Erfinder: MITTELBERGER, Christian, 88212 Ravensburg (DE); BLATTNER, Stefan, 88267 Vogt (DE)
(86) Internationale Anmeldenummer: PCT/EP2008/062272
(87) Internationale Veröffentlichungsnummer: WO 2009/037237

(56) Entgegenhaltungen:
- EP-A- 0 922 600
- WO-A-01/56824
- WO-A-2007/045785
- DE-A1- 10 260 435
- FR-A- 2 882 697

## Beschreibung

Die Erfindung betrifft ein Verfahren zum Betreiben eines zumindest ein Getriebe und einen Hybridantrieb umfassenden Antriebsstrangs eines Kraftfahrzeugs nach dem Oberbegriff des Anspruchs 1 und wie es aus dem Dokument FR 2 882 697 bekannt ist.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft ein Verfahren zum Betreiben eines Antriebsstrangs, der zumindest ein Getriebe und als Antriebsaggregat einen Hybridantrieb umfasst.

Aus der US 2005/0221947 A1 ist ein Verfahren zum Betreiben eines ein Automatgetriebe und einen Hybridantrieb umfassenden Antriebsstrangs eines Kraftfahrzeugs bekannt, wobei einerseits zwischen einem Verbrennungsmotor des Hybridantriebs und einem Elektromotor des Hybridantriebs eine Kupplung und andererseits zwischen dem Elektromotor des Hybridantriebs und dem Automatgetriebe eine weitere Kupplung angeordnet ist. Dann, wenn der Antriebsstrang ausschließlich vom Elektromotor des Hybridantriebs angetrieben wird, kann nach diesem Stand der Technik der Verbrennungsmotor des Hybridantriebs dadurch gestartet werden, dass während der Ausführung einer Hochschaltung durch das Automatgetriebe des Antriebsstrangs die zwischen dem Verbrennungsmotor des Hybridantriebs und dem Elektromotor desselben angeordnete Kupplung geschlossen wird. Nach der US 2005/0221947 A1 dient demnach der Elektromotor des Hybridantriebs dem Starten des Verbrennungsmotors des Hybridantriebs, wobei das Starten des Verbrennungsmotors während der Ausführung eines Gangwechsels und demnach bei einer Zugkraftunterbrechung erfolgt.

Hiervon ausgehend liegt der vorliegenden Erfindung das Problem zu Grunde, ein neuartiges Verfahren zum Betreiben eines ein Getriebe und einen Hybridantrieb umfassenden Antriebsstrangs zu schaffen.

Dieses Problem wird durch ein Verfahren zum Betreiben eines Antriebsstrangs gemäß Anspruch 1 gelöst. Erfindungsgemäß wird dann, wenn bei einem elektromotorischen Antrieb bei laufenden Elektromotor und stillstehendem Verbrennungsmotor vom Getriebe unter Unterbrechung der Zugkraft ein Gangwechsel einer Schaltung ausgeführt wird, unmittelbar nach Ausführung des Gangwechsels der Schaltung und während eines Lastaufbaus der Schaltung der Verbrennungsmotor vom Elektromotor ohne Zugkraftunterbrechung gestartet, wobei hierzu die zwischen dem Verbrennungsmotor und dem Elektromotor angeordnete Kupplung derart gesteuert geschlossen und geöffnet wird, dass die Kupplung durch teilweises Schließen in Schlupf gebracht wird, um den Verbrennungsmotor zu starten, und dass anschließend dieselbe wieder vollständig geöffnet wird, und zwar vor Erreichen einer Synchrondrehzahl zwischen Verbrennungsmotor und Elektromotor.

Der hier vorliegenden Erfindung liegt die Idee zugrunde, den Verbrennungsmotor vom Elektromotor nach Ausführung eines Gangwechsels während des Lastaufbau einer Schaltung und demnach nach Aufhebung der Zugkraftunterbrechung zu starten. Durch das Starten des Verbrennungsmotors wird die Zugkraftunterbrechung demnach nicht verlängert, ein sich durch das Starten des Verbrennungsmotors verändernder Lastaufbau der Schaltung wird vom Fahrer nicht als störend empfunden, so dass das Starten des Verbrennungsmotors mit hohem Komfort realisiert werden kann.

Vorzugsweise wird der Verbrennungsmotor während des Lastaufbaus einer Hochschaltung von einem Gang mit einer relativ hohen Übersetzung in einen Gang mit einer relativ niedrigen Übersetzung vom Elektromotor gestartet.

Dies hat den Vorteil, dass der Start des Verbrennungsmotors im bereits eingelegtem Gang mit der niedrigeren Übersetzung erfolgt, wodurch ein am Abtrieb wirkendes Massenträgheitsmoment weniger störend ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein erstes Antriebsstrangschema eines Kraftfahrzeugs, bei wel- chem das erfindungsgemäße Verfahren einsetzbar ist;
- Fig. 2: ein zweites Antriebsstrangschema eines Kraftfahrzeugs, bei welchem das erfindungsgemäße Verfahren einsetzbar ist;
- Fig. 3: ein drittes Antriebsstrangschema eines Kraftfahrzeugs, bei wel- chem das erfindungsgemäße Verfahren einsetzbar ist.

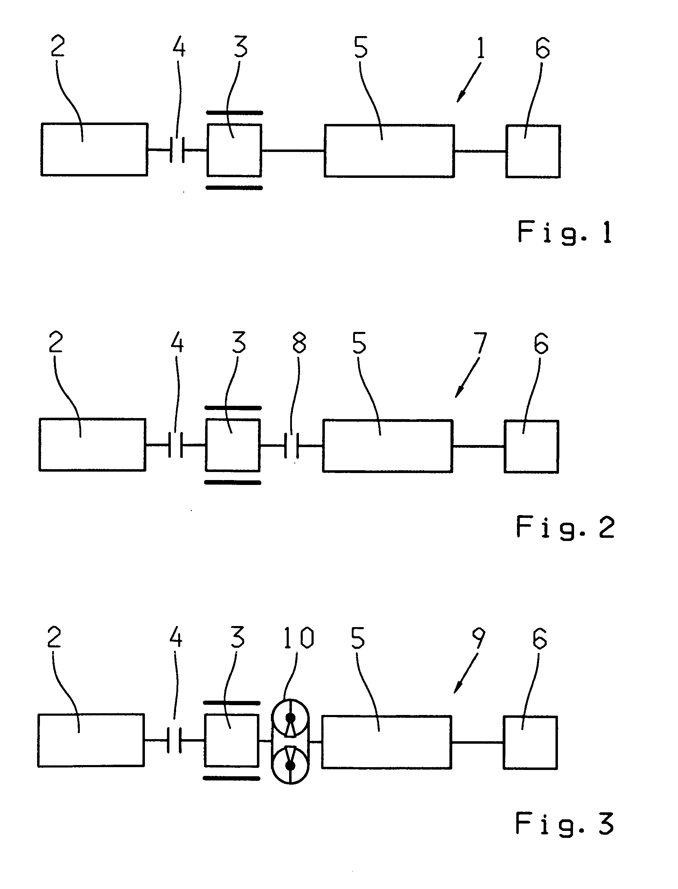

Die Erfindung betrifft ein Verfahren zum Betreiben eines zumindest ein Getriebe und einen Hybridantrieb umfassenden Antriebsstrangs eines Kraftfahrzeugs. Ein Hybridantrieb umfasst einen Verbrennungsmotor und einen Elektromotor. Fig. 1 bis 3 zeigen exemplarisch Antriebsstrangschemata eines Kraftfahrzeugs, bei welchen das erfindungsgemäße Verfahren einsetzbar ist.

So zeigt Fig. 1 ein Schema eines Antriebsstrangs 1 eines Kraftfahrzeugs, wobei der Antriebsstrang 1 gemäß Fig. 1 einen Hybridantrieb umfasst, der von einem Verbrennungsmotor 2 und einem Elektromotor 3 gebildet ist. Zwischen den Verbrennungsmotor 2 und den Elektromotor 3 ist eine Kupplung 4 geschaltet, die dann, wenn der Antriebsstrang 1 ausschließlich vom Elektromotor 3 betrieben wird, geöffnet ist. Neben dem Hybridantrieb umfasst der Antriebsstrang 1 gemäß Fig. 1 weiterhin ein Getriebe 5, welches das vom Hybridantrieb bereitgestellte Zugkraftangebot auf einen Abtrieb 6, nämlich anzutreibende Räder, des Antriebsstrangs umsetzt.

Im Antriebsstrang 7 der Fig. 2 ist zwischen den Elektromotor 3 des Hybridantriebs und das Getriebe 5 eine Kupplung 8 geschaltet. Ein weiteres Schema eines Antriebsstrangs 9 eines Kraftfahrzeugs zeigt Fig. 3, wobei sich der Antriebsstrang gemäß Fig. 3 vom Antriebsstrang der Fig. 2 dadurch unterscheidet, dass zwischen den Elektromotor 3 des Hybridantriebs und das Getriebe 5 keine Kupplung sondern vielmehr eine Wandlereinrichtung 10 geschaltet ist.

Wird ein Antriebsstrang gemäß Fig. 1, 2 oder 3 bei geöffneter Kupplung 4 ausschließlich vom Elektromotor 3 des Hybridantriebs angetrieben, so kann es unter bestimmten Betriebsbedingungen erforderlich sein, den Verbrennungsmotor 2 des Hybridantriebs zu starten.

Im Sinne der hier vorliegenden Erfindung wird dann, wenn bei einem reinen elektromotorischen Antrieb bei laufendem Elektromotor 3 und stillstehendem Verbrennungsmotor 2 vom Getriebe 5 eine Schaltung ausgeführt wird, unmittelbar nach Ausführung des Gangwechsels der Schaltung während eines Lastaufbaus derselben, also nach aufgehobener Zugkraftunterbrechung, der Verbrennungsmotor 2 vom Elektromotor 3 ohne Zugkraftunterbrechung gestartet, wobei hierzu die zwischen dem Verbrennungsmotor 2 und dem Elektromotor 3 angeordnete Kupplung 4 gesteuert geschlossen und geöffnet wird, nämlich derart, dass die Kupplung 4 durch teilweise Schließen in Schlupf gebracht wird, um den Verbrennungsmotor zu starten, und dass anschließend die Kupplung 4 wieder vollständig geöffnet wird, und zwar vor Erreichen einer Synchrondrehzahl zwischen dem Verbrennungsmotor 2 und dem Elektromotor 3.

Das Starten des Verbrennungsmotors 2 erfolgt demnach nach Ausführung des Gangwechsels während des Lastaufbaus der Schaltung und demnach dann, wenn der Elektromotor 3 an den Abtrieb 6 des Antriebsstrangs gekoppelt ist.

Nach einer vorteilhaften Weiterbildung der hier vorliegenden Erfindung wird der Verbrennungsmotor 2 vom Elektromotor 3 während des Lastaufbaus einer Hochschaltung von einem Gang mit einer relativ hohen Übersetzung in einen Gang mit einer relativ niedrigen Übersetzung gestartet. Dies hat den Vorteil, dass der Start des Verbrennungsmotors 2 dann erfolgt, wenn der Gang mit der relativ niedrigen Übersetzung bereits eingelegt ist, wodurch das Störmoment reduziert wird und ein am Abtrieb wirkendes Massenträgheitsmoment des Verbrennungsmotors weniger störend ist. Alternativ ist es auch möglich, den Verbrennungsmotor 2 vom Elektromotor 3 während des Lastaufbaus einer Rückschaltung von einem Gang mit einer relativ niedrigen Übersetzung in einen Gang mit einer relativ hohen Übersetzung zu starten.

Zum Starten des Verbrennungsmotors 2 vom Elektromotor 3 während des Lastaufbaus einer auszuführenden Schaltung ist der Elektromotor ohne Zugkraftunterbrechung an den Abtrieb 6 des Antriebsstrangs gekoppelt, wobei zum Starten des Verbrennungsmotors 2 die Drehzahl des Elektromotors 3 größer als eine Startdrehzahl des Verbrennungsmotors 2 ist.

Nach dem Starten des Verbrennungsmotors 2 wird derselbe durch Schließen der zwischen dem Verbrennungsmotor 2 und dem Elektromotor 3 angeordneten Kupplung 4 an den Abtrieb 6 des jeweiligen Antriebsstrangs gekoppelt, wobei dann der Antriebsstrang vom laufenden Elektromotor 3 und vom laufenden Verbrennungsmotor 2 gemeinsam angetrieben wird.

Das gesteuerte Schließen und Öffnen der zwischen dem Verbrennungsmotor 2 und dem Elektromotor 3 geschalteten Kupplung 4 beim Starten des Verbrennungsmotors 2 während des Lastaufbaus der Schaltung erfolgt derart, dass die Kupplung 4 zuerst bis zu einem Punkt teilweise geschlossen und in Schlupf gebracht wird, in welchem das von der Kupplung 4 übertragene Moment ein Losbrechmoment des Verbrennungsmotors 2 überwindet.

Anschließend wird die teilweise Schließstellung der Kupplung und damit das von derselben übertragene Moment konstant gehalten wird, und wobei anschließend hieran die Kupplung wieder vollständig geöffnet wird, und zwar bevor die Synchrondrehzahl zwischen dem Verbrennungsmotor 2 und dem Elektromotor 3 erreicht wurde.

Das obige, definierte Schließen und Öffnen der Kupplung 4 kann nach einer ersten vorteilhaften Weiterbildung der Erfindung zeitgesteuert erfolgen, wobei hierzu in einer ersten vorgegebenen Zeitspanne die Kupplung 4 bis zu dem Punkt teilweise geschlossen wird, in welchem dieselbe das zum Überwinden des Losbrechmoment erforderliche Moment überträgt, dass anschließend für eine zweite vorgegebene Zeitspanne die teilweise Schließstellung der Kupplung 4 konstant gehalten wird, und dass hieran anschließend in einer dritten vorgegebenen Zeitspanne die Kupplung 4 wieder vollständig geöffnet wird. Diese Zeitspannen sind dann vorgegeben, wobei dieselben auch adaptiv erlernt werden können.

Nach einer zweiten vorteilhaften Weiterbildung des erfindungsgemäßen Verfahrens erfolgt das definierte, gesteuerte Schließen und Öffnen der zwischen dem Verbrennungsmotor 2 und dem Elektromotor 3 angeordneten Kupplung 4 zum Starten des Verbrennungsmotors 2 während des Lastaufbaus der Schaltung drehzahlgesteuert, wobei hierzu die Kupplung 4 bis zu einem Punkt teilweise geschlossen wird, in welchem eine erste vorgegebene Drehzahlschwelle des Verbrennungsmotors 2 erreicht ist, bei welcher das Losbrechmoment des Verbrennungsmotors 2 überwunden ist. Anschließend an das Erreichen der ersten vorgegebenen Drehzahlschwelle wird die erzielte teilweise Schließstellung der Kupplung bis zum Erreichen einer zweiten vorgegebenen Drehzahlschwelle des Verbrennungsmotors 2 konstant gehalten, wobei bei Erreichen der zweiten vorgegebenen Drehzahlschwelle der Verbrennungsmotor 2 eigenständig startet bzw. hoch läuft.

Anschließend wird die Kupplung 4 wiederum vollständig geöffnet, und zwar derart, dass vor Erreichen der Synchrondrehzahl zwischen Verbrennungsmotor 2 und Elektromotor 3 die Kupplung 4 vollständig geöffnet ist.

Während des obigen, gesteuerten Schließens und nachfolgenden Öffnens der zwischen dem Verbrennungsmotor 2 und dem Elektromotor 3 angeordneten Kupplung 4 zum Starten des Verbrennungsmotors 2 während des Lastaufbaus der Schaltung kann das vom Elektromotor 3 bereitgestellte Antriebsmoment, welches in den Abtrieb dauerhaft eingetrieben wird, konstant gehalten werden. Zur Erhöhung des Komforts ist es jedoch möglich, dass alternativ das vom Elektromotor 3 bestellte Antriebsmoment während des teilweise Schließens und anschließenden Öffnens der Kupplung 4 verändert wird, um das von der Kupplung 4 an den Verbrennungsmotor 2 übertragene Moment zu kompensieren und so ein in etwa konstantes Antriebsmoment am Abtrieb 6 zu gewährleisten.

### Bezugszeichen

- 1: Antriebsstrang
- 2: Verbrennungsmotor
- 3: Elektromotor
- 4: Kupplung
- 5: Getriebe
- 6: Abtrieb
- 7: Antriebsstrang
- 8: Kupplung
- 9: Antriebsstrang
- 10: Wandlereinrichtung

## Patentansprüche

1. Verfahren zum Betreiben eines Antriebsstrangs eines Kraftfahrzeugs, wobei der Antriebsstrang einen Hybridantrieb mit einem Verbrennungsmotor und einem Elektromotor, ein zwischen dem Hybridantrieb und einem Abtrieb angeordnetes Getriebe und eine zwischen dem Verbrennungsmotor und dem Elektromotor angeordnete Kupplung umfasst, wobei dann, wenn ausschließlich der Elektromotor antreibt, der Verbrennungsmotor **dadurch** gestartet wird, dass die zwischen dem Verbrennungsmotor und dem Elektromotor angeordnete Kupplung geschlossen wird, wobei wenn bei einem elektromotorischen Antrieb bei laufenden Elektromotor und stillstehendem Verbrennungsmotor vom Getriebe unter Unterbrechung der Zugkraft ein Gangwechsel einer Schaltung ausgeführt wird, unmittelbar nach Ausführung des Gangwechsels der Schaltung und während eines Lastaufbaus der Schaltung der Verbrennungsmotor vom Elektromotor ohne Zugkraftunterbrechung gestartet wird, wobei hierzu die zwischen dem Verbrennungsmotor und dem Elektromotor angeordnete Kupplung derart gesteuert geschlossen und geöffnet wird, dass die Kupplung durch teilweises Schließen in Schlupf gebracht wird, um den Verbrennungsmotor zu starten, und **dadurch gekennzeichnet, dass** anschließend dieselbe wieder vollständig geöffnet wird, und zwar vor Erreichen einer Synchrondrehzahl zwischen Verbrennungsmotor und Elektromotor.

2. Verfahren nach Anspruch 1, **dadurch gekennzeichnet, dass** der Verbrennungsmotor während des Lastaufbaus einer Hochschaltung von einem Gang mit einer hohen Übersetzung in einen Gang mit einer niedrigen Übersetzung vom Elektromotor gestartet wird.

3. Verfahren nach Anspruch 1, **dadurch gekennzeichnet, dass** der Verbrennungsmotor während des Lastaufbaus einer Rückschaltung von einem Gang mit einer niedrigen Übersetzung in einen Gang mit einer hohen Übersetzung vom Elektromotor gestartet wird.

4. Verfahren nach einem der Ansprüche 1 bis 3, **dadurch gekennzeichnet, dass** zum Starten des Verbrennungsmotors der Elektromotor ohne Zugkraftunterbrechung an den Abtrieb des Antriebsstrangs gekoppelt ist, und dass zum Starten des Verbrennungsmotors weiterhin die Drehzahl des Elektromotors größer als eine Startdrehzahl des Verbrennungsmotors ist.

5. Verfahren nach einem der Ansprüche 1 bis 4, **dadurch gekennzeichnet, dass** nach dem Starten des Verbrennungsmotors derselbe durch Schließen der zwischen dem Verbrennungsmotor und dem Elektromotor angeordneten Kupplung an den Abtrieb gekoppelt wird, wobei dann der Antriebsstrang vom laufenden Elektromotor und vom laufenden Verbrennungsmotor angetrieben wird.

6. Verfahren nach einem der Ansprüche 1 bis 5, **dadurch gekennzeichnet, dass** zum Starten des Verbrennungsmotors die zwischen dem Verbrennungsmotor und dem Elektromotor angeordnete Kupplung zuerst so weit teilweise geschlossen wird, dass das von derselben übertragene Moment ein Losbrechmoment des Verbrennungsmotors überwindet, dass anschließend die teilweise Schließstellung der Kupplung konstant gehalten wird, und dass hieran anschließend die Kupplung vollständig geöffnet wird.

7. Verfahren nach Anspruch 6, **dadurch gekennzeichnet, dass** das teilweise Schließen der Kupplung zeitgesteuert erfolgt, derart, dass in einer ersten vorgegebenen Zeitspanne die Kupplung bis zu dem Punkt teilweise geschlossen wird, in welchem dieselbe das zum Überwinden des Losbrechmoment erforderliche Moment überträgt, dass anschließend für eine zweite vorgegebene Zeitspanne die teilweise Schließstellung der Kupplung konstant gehalten wird, und dass hieran anschließend in einer dritten vorgegebenen Zeitspanne die Kupplung wieder vollständig geöffnet wird.

8. Verfahren nach Anspruch 6, **dadurch gekennzeichnet, dass** das teilweise Schließen der Kupplung drehzahlgesteuert erfolgt, derart, dass hierzu die Kupplung bis zu dem Punkt teilweise geschlossen wird, in welchem eine erste vorgegebene Drehzahlschwelle des Verbrennungsmotors erreicht ist, dass anschließend die teilweise Schließstellung der Kupplung bis zum Erriechen einer zweiten vorgegebenen Drehzahlschwelle des Verbrennungsmotors konstant gehalten wird, und dass hieran anschließend die Kupplung wieder vollständig geöffnet wird.

## Claims

1. Method of operating a drive train of a motor vehicle, the drive train comprising a hybrid drive with an internal combustion engine and an electric motor, a transmission arranged between the hybrid drive and a drive output, and a clutch arranged between the internal combustion engine and the electric motor, in which, when only the electric motor is driving, the internal combustion engine is started by engaging the clutch arranged between the internal combustion engine and the electric motor, and, when, during electric motor powered driving with the electric motor running and the internal combustion engine stationary, a gear change of a shift operation is carried out by the transmission with an interruption in the traction force, and, immediately after the gear change of the shift operation has been carried out and during a load build-up phase of the shift operation, the internal combustion engine is started by the electric motor without an interruption in the traction force, for which purpose the clutch arranged between the internal combustion engine and the electric motor is engaged and disengaged in a controlled manner in such a way that by being partially engaged the clutch is brought to a slipping condition in order to start the internal combustion engine, **characterized in that** said clutch is then completely disengaged again, in particular before a synchronous speed between the internal combustion engine and the electric motor is reached.

2. Method according to Claim 1, **characterized in that** the internal combustion engine is started by the electric motor during the load build-up phase of an upshift from a gear with a high transmission ratio to a gear with a low transmission ratio.

3. Method according to Claim 1, **characterized in that** the internal combustion engine is started by the electric motor during the load build-up phase of a downshift from a gear with a low transmission ratio to a gear with a high transmission ratio.

4. Method according to one of Claims 1 to 3, **characterized in that**, for starting the internal combustion engine, the electric motor is coupled to the drive output of the drive train without an interruption in the traction force, and that, for starting the internal combustion engine, the speed of the electric motor is furthermore higher than a starting speed of the internal combustion engine.

5. Method according to one of Claims 1 to 4, **characterized in that**, after the internal combustion engine has been started, said internal combustion engine is coupled to the drive output by engaging the clutch arranged between the internal combustion engine and the electric motor, the drive train then being driven by the running electric motor and by the running internal combustion engine.

6. Method according to one of Claims 1 to 5, **characterized in that**, for starting the internal combustion engine, the clutch arranged between the internal combustion engine and the electric motor is first of all partially engaged until the torque transmitted by said clutch overcomes a breakaway torque of the internal combustion engine, that the partially engaged position of the clutch is then held constant, and that, after this, the clutch is completely disengaged.

7. Method according to Claim 6, **characterized in that** the partial engagement of the clutch takes place in a time-controlled manner in such a way that, in a first specified time interval, the clutch is partially engaged as far as the point at which said clutch transmits the torque required to overcome the breakaway torque, that the partially engaged position of the clutch is then held constant for a second specified time interval, and that, after this, the clutch is completely disengaged again in a third specified time interval.

8. Method according to Claim 6, **characterized in that** the partial engagement of the clutch takes place in a speed-controlled manner in such a way that, for this purpose, the clutch is partially engaged as far as the point at which a first specified speed threshold of the internal combustion engine is reached, that the partially engaged position of the clutch is then held constant until a second specified speed threshold of the internal combustion engine is reached, and that, after this, the clutch is completely disengaged again.

## Revendications

1. Procédé pour faire fonctionner une chaîne cinématique d'un véhicule automobile, dans lequel la chaîne cinématique comprend un entraînement hybride avec un moteur à combustion interne et un moteur électrique, une transmission disposée entre l'entraînement hybride et une prise de force et un embrayage disposé entre le moteur à combustion interne et le moteur électrique, le moteur à combustion interne étant démarré, lorsque seulement le moteur électrique est utilisé comme entraînement, en fermant l'embrayage disposé entre le moteur à combustion interne et le moteur électrique, et dans le cas d'un entraînement par moteur électrique lorsque le moteur électrique tourne et que le moteur à combustion interne est à l'arrêt, lorsqu'un changement de vitesse d'un système de changement de vitesse est effectué par la transmission en interrompant la force de traction, directement après la réalisation du changement de vitesse du système de changement de vitesse et pendant une augmentation de la charge du système de changement de vitesse, le moteur à combustion interne étant démarré par le moteur électrique sans interruption de la force de traction, l'embrayage disposé entre le moteur à combustion interne et le moteur électrique étant à cet effet commandé à se fermer et à s'ouvrir de telle sorte que l'embrayage soit amené par sa fermeture partielle en mode de glissement afin de démarrer le moteur à combustion interne, **caractérisé en ce que** l'embrayage est ensuite complètement ouvert à nouveau, et ce avant d'atteindre un régime synchrone entre le moteur à combustion interne et le moteur électrique.

2. Procédé selon la revendication 1, **caractérisé en ce que** le moteur à combustion interne, pendant l'augmentation de la charge d'un passage à une vitesse supérieure, d'une vitesse à haut rapport de transmission dans une vitesse à bas rapport de transmission, est démarré par le moteur électrique.

3. Procédé selon la revendication 1, **caractérisé en ce que** le moteur à combustion interne, pendant l'augmentation de la charge d'un rétrogradage d'une vitesse de bas rapport de transmission à une vitesse de haut rapport de transmission, est démarré par le moteur électrique.

4. Procédé selon l'une quelconque des revendications 1 à 3, **caractérisé en ce que** pour le démarrage du moteur à combustion interne, le moteur électrique est accouplé sans interruption de la force de traction à la prise de force de la chaîne cinématique, et **en ce que** pour démarrer le moteur à combustion interne, le régime du moteur électrique est en outre supérieur à un régime de démarrage du moteur à combustion interne.

5. Procédé selon l'une quelconque des revendications 1 à 4, **caractérisé en ce qu'**après le démarrage du moteur à combustion interne, celui-ci est accouplé à la prise de force par fermeture de l'embrayage disposé entre le moteur à combustion interne et le moteur électrique, la chaîne cinématique étant alors entraînée par le moteur électrique qui tourne et par le moteur à combustion interne qui tourne.

6. Procédé selon l'une quelconque des revendications 1 à 5, **caractérisé en ce que** pour le démarrage du moteur à combustion interne, l'embrayage disposé entre le moteur à combustion interne et le moteur électrique est d'abord fermé partiellement dans une mesure telle que le couple transmis par celui-ci surmonte un couple de lancement du moteur à combustion interne, **en ce qu'**ensuite la position de fermeture partielle de l'embrayage est maintenue constante, et **en ce qu'**ensuite l'embrayage est complètement ouvert.

7. Procédé selon la revendication 6, **caractérisé en ce que** la fermeture partielle de l'embrayage a lieu de manière commandée dans le temps, de telle sorte que dans un premier intervalle de temps prédéfini, l'embrayage soit partiellement fermé jusqu'au point où celui-ci transmet le couple nécessaire pour surmonter le couple de lancement, **en ce qu'**ensuite pendant un deuxième intervalle de temps prédéfini, la position de fermeture partielle de l'embrayage est maintenue constante, et **en ce qu'**ensuite, dans un troisième intervalle de temps prédéfini, l'embrayage est à nouveau complètement ouvert.

8. Procédé selon la revendication 6, **caractérisé en ce que** la fermeture partielle de l'embrayage a lieu de manière commandée en régime de telle sorte que l'embrayage soit à cet effet partiellement fermé jusqu'au point où un premier seuil de régime prédéfini du moteur à combustion interne soit atteint, **en ce qu'**ensuite la position de fermeture partielle de l'embrayage est maintenue constante jusqu'à l'obtention d'un deuxième seuil de régime prédéfini du moteur à combustion interne, et **en ce qu'**ensuite l'embrayage est à nouveau complètement ouvert.
